# EUROPEAN PATENT SPECIFICATION

(11) **EP 3 121 630 B1**
(45) Date of publication and mention of the grant of the patent: **05.04.2023**
(21) Application number: 15177665.5
(22) Date of filing: 21.07.2015
(51) Int. Cl.: G02B 6/42

(54) **OPTOELECTRONIC MODULE WITH IMPROVED HEAT MANAGEMENT**
OPTOELEKTRONISCHES MODUL MIT VERBESSERTER WÄRMEVERWALTUNG
MODULE OPTOÉLECTRONIQUE AVEC GESTION THERMIQUE AMÉLIORÉE

(43) Date of publication of application: 25.01.2017
(73) Proprietor: Tyco Electronics Svenska Holdings AB, 175 26 Jaerfaella (SE)
(72) Inventor: STEIJER, Odd Robert, 16868 Bromma (SE); ANDERSSON, Magnus, 17770 Jaerfaella (SE)
(74) Representative: Grünecker Patent- und Rechtsanwälte PartG mbB

(56) References cited:
- JP-A- 2015 022 129
- US-A1- 2014 064 675
- US-A1- 2015 003 839

## Description

The present invention relates to an optoelectronic module for receiving at least one optical ferrule and for electrically connecting with at least one electrical connector.

Optoelectronic modules, such as optoelectronic transceivers are increasingly used in electronic and optoelectronic communication. Optoelectronic modules generally include an outer housing or casing that at least partially encloses one or more transmitters and/or receivers as well as one or more printed circuit boards (PCB) with circuitry related to the transmitters/receivers, such as driving and amplifying circuitry. Electrical data signals generally pass through this circuitry as they pass between the transmitter/receiver and a host device in which the optoelectronic module is positioned. It is desirable for optoelectronic communication to send and receive data signals having ever higher frequencies in order to increase the rate at which data may be communicated via the optoelectronic module. However, increasing data signal frequencies may present a number of difficulties in designing optoelectronic modules. In particular, proper thermal management is becoming increasingly difficult.

In some instances, the design of certain aspects of optoelectronic modules is constrained by Multi-Source Agreements (MSAs). MSAs govern particular aspects of the module to allow the module to be plugged into a host device designed in compliance with the MSA. Aspects specified by the MSA may include housing dimensions, as well as connector dimensions and placement. In some instances, MSAs may require that the module include a dual-side rigid edge connector for forming a pluggable communication connection with a host device.

There are many ways to realize optical module assemblies, but in all cases they share four fundamental types of connection:
- Optical
- Electrical
- Thermal
- Mechanical

In order to achieve appropriate overall performance one normally has to make compromises between the four types of connection due to design limitations caused by the assembly technologies.

An example of a known optoelectronic module is the Quad Small Form-Factor Pluggable (QSFP) transceiver module sold by TE Connectivity under the name "QSFP28 Transceiver". A schematic longitudinal cross-section of this transceiver module 200 is shown in Figures 1 and 2. Fig. 3 is a block diagram of the QSFP transceiver 200.

The transceiver module comprises an optical engine (OE) 202 containing optical components such as vertical-cavity surface-emitting lasers (VCSELs) and photodiodes as well as electronic components for simultaneously transmitting and receiving signals between the optical and the electrical side. From the optical side, an optical ferrule (not shown in the Figure) can be connected to a fiber optic connector 204. The fiber optic connector 204 is for instance formed as a standardized so-called mechanical transfer (MT) connector. An internal fiber pigtail 206 connects the fiber optic connector 204 to the optical engine 202. An optical chip connector 208 contacts the optical engine 202.

For contacting the electrical side, the transceiver module 200 comprises a rigid edge connector 210 for contacting an electrical connector (not shown in the Figure). The edge connector 210 is an integral part of a printed circuit board (PCB) 212 which carries the OE 202.

The transceiver module 200 further comprises a casing formed by two half shells 214, 216. The upper half shell 214 is formed to be thermally contacted by an external heat sink 218. The heat sink 218 is a part of a cage assembly which is not shown in the Figure. A thermal bridge 220 forming part of a thermal interface conducts heat generated by the optical engine 202 towards the casing. A compressible thermal interface material, in particular a gap pad 222 connects the thermal bridge 220 with the lower half shell 216 of the casing. A sealing and at the same time thermally conductive casting compound 224 fills the gap between the thermal bridge 220 and the heat generating components of the OE 202.

The position and shape of the electrical interface formed by the edge connector 210 is defined by the standard SFF-8661. As a consequence, there is not enough space for the optical engine 202 and the optical connection 208 to face the casing's lower shell 216. This means that the thermal connection has to interface to the casing's lower shell 216. Having the thermal interface (including the thermal bridge) arranged at the lower shell 216 results in a long heat dissipation path since the outer heat sink 218 is attached to the casing's top shell 214. The result is a higher working temperature, which influences VCSEL life time.

Furthermore, since the PCB 212 has to be mechanically floating with respect to the casing, the thermal interface has to be compliant, which further decreases the thermal performance. A certain force has to be applied to the thermal interface to keep it intact, which applies mechanical stress to the solder electrical interface between the OE 202 and the PCB 212. The predetermined position of the thermal interface results in high requirements on the length of the internal fiber pigtail 206; otherwise there will be too high mechanical stress on the optical connection to the OE 202.

In the typical optical assembly of the conventional design the thermal, optical, mechanical, and electrical connections are tightly integrated. All four types of connection interfere with each other causing a non optimal overall performance.

JP 2015-22129 A discloses an optical module that includes a housing including an upper cover and a lower cover, a first circuit board having a wiring pattern for transmitting an electric signal, a second circuit board on which a photonic device is bonded, the photonic device converting the electric signal into light or converting the light into the electric signal, an optical waveguide that is provided on the first circuit board, and guides the light output from the photonic device or the light to be incident on the photonic device, and a first thermal conducting member having plasticity, wherein, the optical waveguide, the second circuit board, and the first thermal conducting member are layered on the first circuit board, a first protrusion formed on the upper cover is adhered to a top surface of the first thermal conducting member, and the first thermal conducting member is adhered to a top surface of the photonic device.

US 2015/0003839 A1 discloses an optical transceiver which includes a main board, a flexible board provided on a surface of the main board, an optical module mounted on the flexible board, and an optical fiber connected to the optical module. A position of the flexible board with respect to the main board is freely adjusted in a length direction of the optical fiber.

US 2014/0064675 A1 relates to an optical module that includes a transparent substrate through which light can pass, a photoelectric conversion element mounted on the transparent substrate and emitting light toward the transparent substrate or receiving light having passed through the transparent substrate, and a support member supporting an optical fiber for transmitting light. The support member and the transparent substrate form an optical path between the photoelectric conversion element and the optical fiber. A positioning hole is formed in the transparent substrate. A positioning pin having a tapered surface is formed on the support member. The transparent substrate and the support member are positioned with respect to one another by inserting the positioning pin into the positioning hole along the optical axis direction of light between the transparent substrate and the support member and by making the tapered surface of the positioning pin contact the edge of the positioning hole without leaving any space therebetween.

The object underlying the present invention is to overcome the drawbacks of the existing solutions and to provide an optoelectronic module that has an improved heat management leading to an enhanced operational life of the active components, that is robust and reliable, and at the same time can be fabricated economically.

This object is solved by the subject matter of independent claim 1. Advantageous embodiments of the present invention are the subject matter of the dependent claims.

The present invention is based on the idea that by separating the rigid electric contact element from the carrier onto which the opto-electric assembly is mounted, a separation of the above-mentioned types of connection can be achieved so that the different types of connection can be optimized independently from each other. A significantly improved heat management is the consequence.

When particularly referring to the embodiment of a transceiver module as explained above, this invention proposes a solution in which the four types of connection interfere as little as possible. The concept essentially is based on splitting the PCB into two PCB isles connected by a flexible part. A first PCB carries the OE and a second PCB includes the module's electrical connector section. This approach allows for the following advantages:
- Free choice of the thermal attachment position of the OE PCB, for example to the top shell, which reduces the heat dissipation path.
- The thermal interface joint can be thin and rigid, since no compliance due to floating is required. This gives an effective thermal connection.
- Wider tolerance of positioning of the OE which decreases the tolerance requirements and the mechanical stress on the optical connection and the internal fiber pigtail.

Consequently, an optoelectronic module according to the present invention has an improved performance and operational life.

According to the present invention, the carrier is thermally connected to the heat dissipating wall of the casing via a thermal bridge. The thermal bridge can either be formed as a separate part as explained above or a suitable mating structure can be integrated into the shell of the casing. When providing the thermal bridge as a separate part, the thermal bridge advantageously can be attached to the opto-electric assembly before mounting same within the casing. The thermal bridge is preferably fabricated from aluminium.

Providing the thermal bridge as an integral part of the casing, on the other hand, has the advantage that it can be fabricated in one step with the respective casing part and does not have to be kept in stock separately.

When being a separate part, the thermal bridge advantageously is attached to the casing by means of a rigid thermal interface joint. Due to the fact that the carrier is not rigidly connected with the contact element, the thermal interface joint can be thin and rigid and does not have to provide resiliency.

Advantageously, the thermal bridge is coupled to the carrier by means of a thermally conductive casting compound that covers and seals the transducing component. Such a casting compound on the one hand dissipates the heat most effectively and, on the other hand, protects the optical and electronic devices of the transducing component.

In order to most efficiently lead the heat away from the opto-electric assembly, the outer surface of the heat dissipating wall, which is thermally connected to the opto-electric assembly, is configured to be thermally coupled to a heat sink.

The flexible electrical connecting element according to the present invention may be formed as an integral part with the carrier. Such a solution dispenses with separate connecting steps, such as soldering, press fit or crimp connections. In particular, the carrier that carries the OE does not have to be rigid, but may be part of a flexible foil.

However, the flexible electrical connecting element may also be a separate part which is attached to the carrier for instance by means of soldering, or anisotropic conductive film (ACF) bonding. This offers modularity, meaning that the same OE carrier can be used together with several variants of the electrical connector section. ACF bonding is a technique that uses an epoxy adhesive system filled with conductive particles for forming an electrical interconnection through the film thickness. A combination of heat and pressure is applied for establishing the connection. ACF interconnect offers cost savings compared to solder techniques, and allows low height and fine pitch in order to achieve and high density miniaturized assembly. The ACF bonding can on either side of the flexible electrical connecting element, i. e. for the connection to the carrier or to the rigid contact element or to both.

According to an advantageous embodiment of the present invention, the flexible electrical connecting element is formed as an integral part with the rigid contact element, for instance as the multi-layer circuit board arrangement having a flexible foil combined with a rigid ceramic or polymer circuit board.

The optoelectronic module according to the present invention advantageously offers the same functionalities as those described above with respect to the conventional QSFP transceiver. In particular, the transducing component comprises at least one VCSEL for emitting radiation, at least one photodiode for receiving radiation, and at least one microcontroller for controlling communication. However, it is clear for a person skilled in the art, that the principles of the present invention can also be used for different architectures of an optoelectronic module.

In order to allow for a short distance between the surface of the heat generating transducing component and the heat dissipating wall of the casing, the transducing component is assembled on a transparent substrate, for instance fabricated from glass. By providing transparency of the substrate, radiation can be emitted and received through the substrate and the optical connection to the flexible optical connecting element can be arranged on the surface opposite to the one carrying the transducing component. At least one lens is provided for interconnecting the substrate with the flexible optical connecting element.

The optical dies and integrated circuits are preferably electrically connected by solder bump flip-chip attach to the glass carrier. The electrical connections are terminated at the periphery of the glass carrier and the glass carrier is electrically connected e. g. by means of a solder connection to a preferably rectangular opening in the carrier.

Satisfactory optical characteristics and a cost-effective fabrication of the flexible optical connecting element can be achieved by using one or more optical fibers. For instance, a ribbon pigtail can be used as the flexible optical connecting element. A standardized optical connector is provided for contacting the optical ferrule. The connector is for instance formed as a standardized mechanical transfer (MT) connector.

In order to allow for a precise and simple assembly, the casing may be formed by at least two shells which are joined along a longitudinal axis of the optoelectronic module.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used.

Further features and advantages will become apparent from the following more particular description of the various embodiments of the invention, as illustrated in the accompanying drawings, in which like references refer to like elements, and wherein:

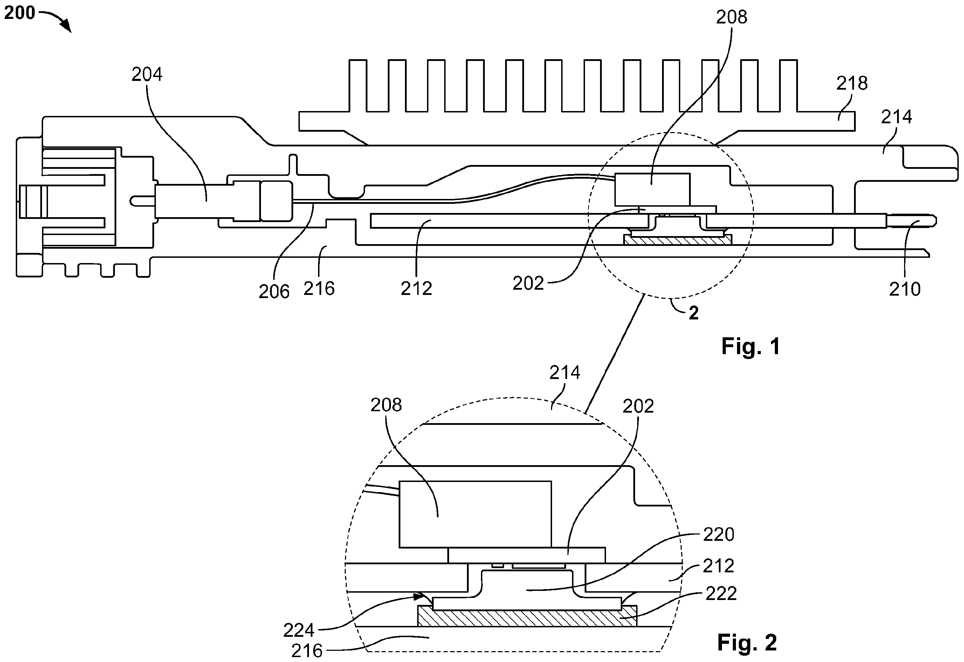

- **FIG. 1**: shows a schematic cross-sectional view of optoelectronic module according to TE Connectivity's present design;
- **FIG. 2**: shows a detail of Fig. 1;

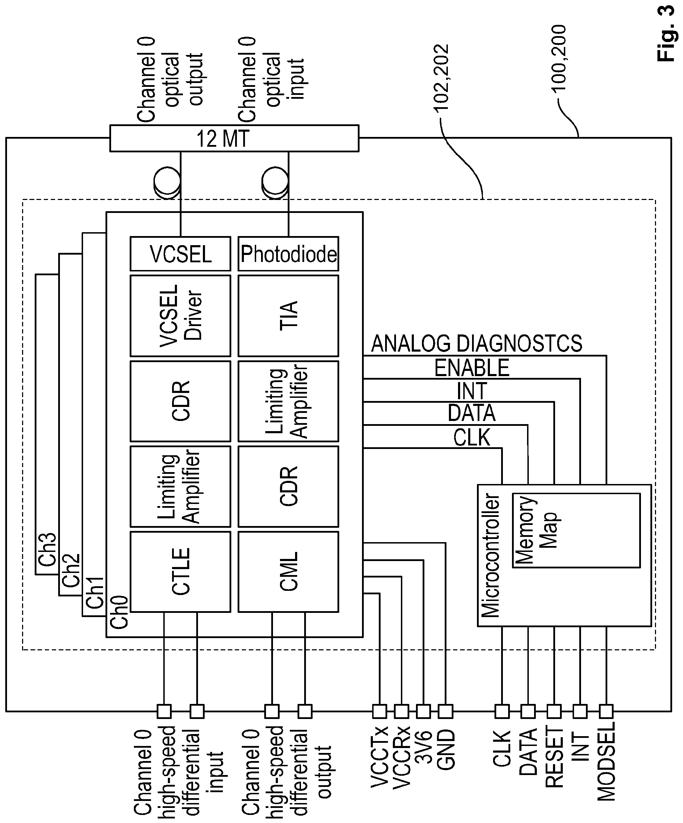

- **FIG. 3**: shows a block diagram of the functional architecture of a multichannel optoelectronic transceiver;

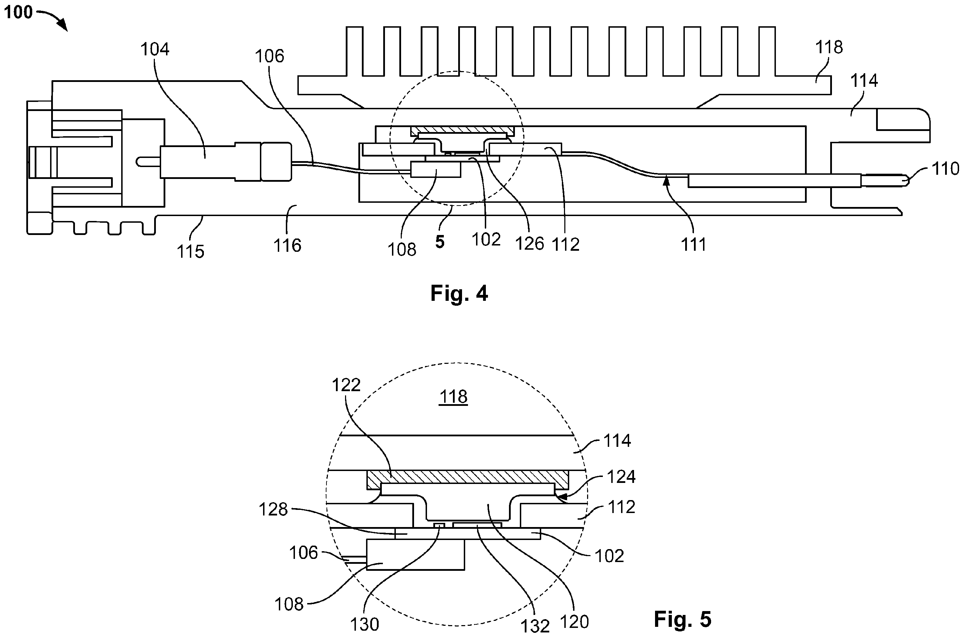

- **FIG. 4**: shows a schematic cross-sectional view of an optoelectronic module according to a first embodiment of the present invention;
- **FIG. 5**: shows a detail of Fig. 4;

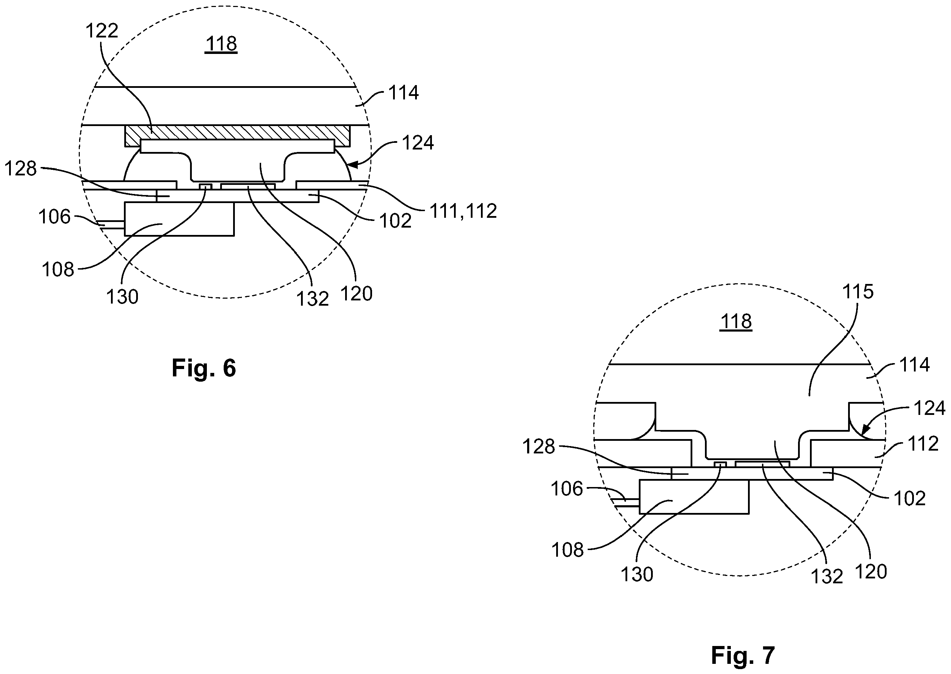

- **FIG. 6**: shows the thermal coupling between the opto-electric assembly and the module casing according to a further embodiment;
- **FIG. 7**: shows the thermal coupling between the opto-electric assembly and the module casing according to still another embodiment;

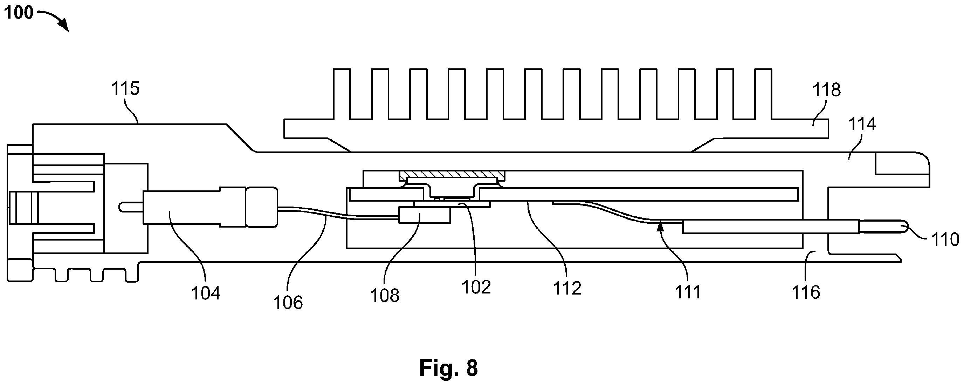

- **FIG. 8**: shows a schematic cross-sectional view of an optoelectronic module according to a further embodiment of the present invention.

The present invention will now be further explained referring to the Figures, and firstly referring to Figures 3 and 4. Fig. 4 shows a schematic cross-sectional view of an optoelectronic module 100 according to a first embodiment of the present invention. As an example, the functional system architecture of the optoelectronic module according to the present invention can be identical to the architecture of the conventional QSFP transceiver shown in Figures 1 and 2. Consequently, the block diagram of Fig. 3 also refers to the optoelectronic module 100 according to the present invention.

The optoelectronic module 100 converts signals between an optical side and an electronic side using an optical engine (OE) 102. As shown in Fig. 3, the optical engine 102 comprises at least one vertical-cavity surface-emitting laser (VCSEL) for emitting radiation and at least one photodiode for receiving radiation. The VCSEL is driven by a belonging driver under the control of a microcontroller in order to convert electric signals into optical signals. The electrical signals generated by the photodiode are amplified by a transimpedance amplifier (TIA), a limiting amplifier, a clock/data recovery (CDR) and a current-mode logic (CML) serial interface, so that optical signals are converted into electrical signals.

As shown in Fig. 4, an optical ferrule (not shown in the Figures) is connected to an optical connector 104, thereby establishing a contact to the optical side. On the electrical side, an electrical connector (not shown in the Figures) can be contacted by a rigid contact element 110 which is formed to comply with a desired standard, such as SFF-8661. The optical engine 102 is mounted on a carrier 112. A casing 115, which is formed by an upper half shell 114 and a lower half shell 116, covers and protects the assembly. In order to provide a shielding as well as effective heat dissipation, the casing 115 may be fabricated from an electrically conductive material, for instance metal.

According to the present invention, the rigid contact element 110 is connected to the carrier 112 by means of a flexible electrical connecting element 111. This bendable link between the rigid contact element 110 and the carrier 112 carrying the optical engine 102 allows for a far-reaching flexibility regarding the position of the carrier 112 in all three dimensions. In particular, the carrier can be arranged close to the upper half shell 114 of the casing 115. Thereby, the heat generating components can be directly thermally connected to the inner side of the wall which on its outer surface is connected to the heat sink 118. This geometry significantly improves heat dissipation. Moreover, any resiliency that is needed for compensating tolerances between the position of the rigid contact element 110 and the optical engine 102 is provided by the flexible electrical connecting element 111. Consequently, the mechanical connection between the carrier 112 and the casing 115 does not necessarily have to be resilient. The flexible electrical connecting element 111 may for instance be formed from a flat flexible foil cable comprising laminated metal leads. This foil cable may be attached to the carrier 112 and the rigid contact element 110 by any convenient connection technique. Moreover, the carrier 112, the flexible electrical connecting element 111, and the rigid contact element 110 may also be fabricated as one integral rigid-flexible circuit board formed as a multilayer structure having rigid and bendable regions.

Furthermore, the optical signals are transmitted from the optical engine 102 towards the optical connector 104 via a ribbon of optical fibers 106, forming a flexible optical connecting element.

Fig. 5 shows a detail of Fig. 4. According to an advantageous embodiment, the carrier 112 has an opening 126, at which the optical engine 102 is assembled, and the optical engine 102 comprises a transparent substrate 128. The substrate 128 may for instance be fabricated from glass. Optical components 130 and integrated circuits (IC) 132 are arranged on one side of the glass substrate 128, whereas an optical chip connector 108 that is connected to the optical fibers 106 and comprises a lens arrangement for coupling the light into the optical fibers 106 is positioned on the opposite surface. The optical dies 130 and ICs 132 are electrically connected by solder bump flip-chip attach to the transparent glass carrier 128. However, it is clear for a person skilled in the art that any other suitable assembly technique may also be employed.

The electrical connections of the substrate 128 are preferably soldered to corresponding contact pads on the carrier 112.

The backsides of the optical dies 130 and ICs 132 are thermally connected by an aluminium stud which forms a thermal bridge 120. Thereby, heat which is generated by the optical dies 130 and the ICs 132 can be dissipated to an external heat sink 118 via the wall of the module metal casing 115. For protecting the optical dies 130 and the ICs 132, and for mechanically attaching the thermal bridge 120 to the carrier 112, a thermally conductive casting compound 124 is applied. For connecting the thermal bridge 120 to the inner surface of the casing wall, a thermally conductive gap pad or thermally conductive adhesive joint 122 is used.

Both the flexible electrical connecting element 111 and the flexible optical connecting element 106 are bendable in all three dimensions and therefore the thermal bridge 120 can be mechanically fixed to the casing 115 without adding mechanical strength to the assembly. Moreover, the thermal bridge 120 can be attached to the wall of the upper half shell 114 which is in contact to the heat sink 118. Consequently, a much shorter path for the heat to be dissipated can be achieved.

Referring now to Fig. 6, a further embodiment of the present invention will be explained. While the carrier 112 according to the first embodiment is formed by a separate printed circuit board, according to this embodiment, the carrier 112 is directly formed by the flexible electrical connecting element 111. The advantage of this construction can be seen in the fact that less fabrication steps and fewer separate parts are involved in the fabrication, and that the total height of the assembly can be reduced. In order to provide sufficient stability, a higher amount of the sealing casting compound 124 can be applied between the carrier 112 and the thermal bridge 120 compared to the first embodiment. Alternatively, a thinner thermal bridge 120 can be used.

A further variation of the arrangement according to the present invention is depicted in Fig. 7. According to this embodiment, the thermal bridge 120 is an integral part of the casing 115. This arrangement has the advantage, that no additional layer 122 is present between the thermal bridge and the casing 115, so that the overall thermal resistance is reduced. Moreover, less separate parts are needed for the assembly. Preferably, the thermal bridge 120 is formed as a part of the upper half shell 114 which on its outer surface is in direct contact with the heat sink 118.

Using such an arrangement is possible because of the flexibility of the electrical and optical links to the electrical and optical connectors 110 and 104, respectively. Although in Fig. 7 the carrier 112 is depicted as a printed circuit board according to the first embodiment, it is clear that of course also the embodiment of Fig. 6, where the carrier is an integral part of the flexible flat foil 111, can be combined with a thermal bridge 120 integrated into the casing 115.

Fig. 8 shows a schematic cross-sectional view of an optoelectronic module 100 according to a further embodiment of the present invention. According to this embodiment, the carrier 112 has a larger size in order to facilitate the attachment of the flexible electrical connecting element 111. The electrical connection may for instance be accomplished by soldering or ACF bonding, as mentioned above. Furthermore, the carrier 112 may also comprise shielding and ground layers in a region close to the rigid contact element 110.

**REFERENCE NUMERALS**

| **Reference Numeral** | **Description** |
|---|---|
| 100 | Optoelectronic module |
| 102 | Opto-electric assembly, optical engine, OE |
| 104 | Fiber optic connector |
| 106 | Flexible optical connecting element, e. g. a fiber ribbon |
| 108 | Optical chip connector |
| 110 | Rigid contact element |
| 111 | Flexible electrical connecting element |
| 112 | Carrier |
| 114 | Upper half shell of casing |
| 115 | Casing |
| 116 | Lower half shell of casing |
| 118 | Heat sink |
| 120 | Thermal bridge |
| 122 | Gap pad or adhesive bond |
| 124 | Casting compound |
| 126 | Opening in carrier |
| 128 | Transparent substrate |
| 130 | Optical components |
| 132 | Integrated circuits, IC |
| 200 | Optoelectronic module |
| 202 | Opto-electric assembly, optical engine, OE |
| 204 | Fiber optic connector |
| 206 | Flexible pigtail, fiber ribbon |
| 208 | Optical chip connector |
| 210 | Edge connector |
| 212 | Printed circuit board, PCB |
| 214 | Upper half shell of casing |
| 216 | Lower half shell of casing |
| 218 | Heat sink |
| 220 | Thermal bridge |
| 222 | Gap pad |
| 224 | Casting compound |

## Claims

1. Optoelectronic module for receiving at least one optical ferrule and for electrically connecting with at least one electrical connector, the optoelectronic module (100) comprising:
an opto-electric assembly (102) comprising a transducing component (130) for converting optical signals into electrical signals and for converting electrical signals into optical signals,
and a transparent substrate (128), the transducing component (130) being arranged on a first surface of the transparent substrate (128),
an optical interface for optically connecting said optical ferrule with said opto-electric assembly (102), the optical interface comprising an optical connector (104) for contacting the optical ferrule,
an electrical interface for electrically connecting said electrical connector with said opto-electric assembly (102), the electrical interface comprising a rigid contact element (110) for contacting said electrical connector,
a module casing (115) that at least partly encompasses the opto-electric assembly (102) and the optical and electrical interfaces, said module casing (115) being configured to dissipate heat generated by the opto-electric assembly (102),
wherein the opto-electric assembly (102) is mounted with a side of the transparent substrate (128) on a carrier (112) that is attached to a heat dissipating wall of the module casing (115) in a thermally conductive way, and wherein the optical interface comprises an optical chip connector (108) with at least one lens and a flexible optical connecting element (106) for interconnecting said carrier (112) and
said optical connector (104), the optical chip connector (108) being attached to the second surface of the transparent substrate (128) opposing to the first side,
wherein the transparent substrate (128) is mounted at an opening (126) of said carrier (112), so that the first surface of the transparent substrate (128) carrying the transducing component (130) faces towards said heat dissipating wall, that the opposing second surface of substrate (128) is connected via the at least one lens to the flexible optical connecting element (106), and that the heat dissipating wall and the transducing component (130) are thermally connected via a thermal bridge (120) the optoelectronic module being **characterised in that** the electrical interface comprises a flexible connecting element (111) for interconnecting said carrier (112) and said rigid contact element, and **in that** the opto-electric assembly is mounted with the first side of the transparent substrate on the said carrier such that the opto-electric assembly is connected via the said thermal bridge through the said opening.

2. Optoelectronic module according to claim 1, wherein said thermal bridge (120) is an integral part of the casing (115).

3. Optoelectronic module according to claim 1, wherein said thermal bridge (120) is attached to the casing (115) by means of a rigid thermal interface joint.

4. Optoelectronic module according to one of the claims 1 to 3, wherein the thermal bridge (120) is coupled to the carrier (112) by means of a thermally conductive casting compound (124) that covers and seals the transducing component.

5. Optoelectronic module according to one of the preceding claims, further comprising a heat sink (118), wherein an outer surface of the heat dissipating wall is thermally coupled to said heat sink (118).

6. Optoelectronic module according to one of the preceding claims, wherein said carrier (112) is formed as an integral part of said flexible electrical connecting element (111).

7. Optoelectronic module according to claim 6, wherein said carrier (112) is formed from a flexible foil.

8. Optoelectronic module according to one of the preceding claims, wherein said flexible electrical connecting element (111) is formed as an integral part with said rigid contact element (110).

9. Optoelectronic module according to one of the preceding claims, wherein said transducing component comprises at least one vertical-cavity surface-emitting laser, VCSEL, at least one photodiode, and at least one microcontroller.

10. Optoelectronic module according to one of the preceding claims, wherein the flexible optical connecting element (106) comprises at least one optical fiber.

11. Optoelectronic module according to one of the preceding claims, wherein the flexible electrical connecting element (111) is attached to the carrier (112) and/or the rigid contact element (110) by means of soldering or anisotropic conductive film, ACF, bonding.

12. Optoelectronic module according to one of the preceding claims, wherein the casing (115) is formed by at least two shells (114, 116) which are joined along a longitudinal axis of the optoelectronic module (110).

## Patentansprüche

1. Optoelektronisches Modul zum Aufnehmen wenigstens einer optischen Ferrule und zum elektrischen Verbinden mit wenigstens einem elektrischen Verbinder, wobei das optoelektronische Modul (100) umfasst:
eine optoelektrische Baugruppe (102), die eine Wandlerkomponente (130) zum Umwandeln optischer Signale in elektrische Signale sowie zum Umwandeln elektrischer Signale in optische Signale, und ein transparentes Substrat (128) umfasst, wobei die Wandlerkomponente (130) an einer ersten Fläche des transparenten Substrats (128) angeordnet ist,
eine optische Schnittstelle zum optischen Verbinden der optischen Ferrule mit der optoelektrischen Baugruppe (102), wobei die optische Schnittstelle einen optischen Verbinder (104) zum Herstellen von Kontakt mit der optischen Ferrule umfasst,
eine elektrische Schnittstelle zum elektrischen Verbinden des elektrischen Verbinders mit der optoelektrischen Baugruppe (102), wobei die elektrische Schnittstelle ein starres Kontaktelement (110) zum Herstellen von Kontakt mit dem elektrischen Verbinder umfasst,
ein Modul-Gehäuse (115), das die optoelektrische Baugruppe (102) sowie die optische und die elektrische Schnittstelle wenigstens teilweise umschließt, wobei das Modul-Gehäuse (115) so ausgeführt ist, dass es durch die optoelektrische Baugruppe (102) erzeugte Wärme ableitet,
und die optoelektrische Baugruppe (102) mit einer Seite des transparenten Substrats (128) an einem Träger (112) montiert ist, der wärmeleitend an einer wärmeableitenden Wand des Modul-Gehäuses (115) angebracht ist,
und die optische Schnittstelle einen Optikchip-Verbinder (108) mit wenigstens einer Linse sowie ein flexibles optisches Verbindungselement (106) zum Verbinden des Trägers (112) und des optischen Verbinders (104) miteinander umfasst, wobei der optische Chip-Verbinder (108) an der zweiten Fläche des transparenten Substrats (128) angebracht ist, die der ersten Seite gegenüberliegt,
das transparente Substrat (128) an einer Öffnung (126) des Trägers (112) so angebracht ist, dass die erste Fläche des transparenten Substrats (128), die die Wandler-Komponente (130) trägt, der wärmeableitenden Wand zugewandt ist, dass die gegenüberliegende zweite Fläche des Substrats (128) über die wenigstens eine Linse mit dem flexiblen optischen Verbindungselement (106) verbunden ist, und dass die wärmeableitende Wand und die Wandler-Komponente (130) über eine Wärmebrücke (120) thermisch verbunden sind, wobei das optoelektronische Modul **dadurch gekennzeichnet ist, dass** die elektrische Schnittstelle ein flexibles Verbindungselement (111) zum Verbinden des Trägers (112) und des starren Kontaktelementes miteinander umfasst, und dass die optoelektrische Baugruppe mit der ersten Seite des transparenten Substrats an dem Träger so montiert ist, dass die optoelektrische Baugruppe über die Wärmebrücke durch die Öffnung hindurch verbunden ist.

2. Optoelektronisches Modul nach Anspruch 1, wobei die Wärmebrücke (120) ein integraler Teil des Gehäuses (115) ist.

3. Optoelektronisches Modul nach Anspruch 1, wobei die Wärmebrücke (120) mittels einer starren thermischen Schnittstellenverbindung an dem Gehäuse (115) angebracht ist.

4. Optoelektronisches Modul nach einem der Ansprüche 1 bis 3, wobei die Wärmebrücke (120) mittels einer wärmeleitenden Vergussmasse (124), die die Wandlerkomponente abdeckt und abdichtet, mit dem Träger (112) gekoppelt ist.

5. Optoelektronisches Modul nach einem der vorangehenden Ansprüche, das des Weiteren einen Kühlkörper (118) umfasst, wobei eine Außenfläche der wärmeableitenden Wand thermisch mit dem Kühlkörper (118) gekoppelt ist.

6. Optoelektronisches Modul nach einem der vorangehenden Ansprüche, wobei der Träger (112) als ein integraler Teil des flexiblen elektrischen Verbindungselementes (111) ausgebildet ist.

7. Optoelektronisches Modul nach Anspruch 6, wobei der Träger (112) aus einer flexiblen Folie besteht.

8. Optoelektronisches Modul nach einem der vorangehenden Ansprüche, wobei das flexible elektrische Verbindungselement (111) als ein integraler Teil des starren Kontaktelementes (110) ausgebildet ist.

9. Optoelektronisches Modul nach einem der vorangehenden Ansprüche, wobei die Wandlerkomponente wenigstens eine VCSEL-Laserdiode, wenigstens eine Fotodiode und wenigstens einen Mikrocontroller umfasst.

10. Optoelektronisches Modul nach einem der vorangehenden Ansprüche, wobei das flexible optische Verbindungselement (106) wenigstens eine optische Faser umfasst.

11. Optoelektronisches Modul nach einem der vorangehenden Ansprüche, wobei das flexible elektrische Verbindungselement (111) mittels Löten oder ACF-Bonding an dem Träger (112) und/oder dem starren Kontaktelement (110) angebracht ist.

12. Optoelektronisches Modul nach einem der vorangehenden Ansprüche, wobei das Gehäuse (115) aus wenigstens zwei Schalen (114, 116) besteht, die entlang einer Längsachse des optoelektronischen Moduls (110) verbunden sind.

## Revendications

1. Module optoélectronique pour recevoir au moins une férule optique et pour établir une connexion électrique avec au moins un connecteur électrique, le module optoélectronique (100) comprenant :
un ensemble optoélectrique (102) comprenant un composant transducteur (130) pour convertir des signaux optiques en signaux électriques et pour convertir des signaux électriques en signaux optiques, et un substrat transparent (128), le composant transducteur (130) étant agencé sur une première surface du substrat transparent (128),
une interface optique pour connecter optiquement ladite férule optique avec ledit ensemble optoélectrique (102), l'interface optique comprenant un connecteur optique (104) pour contacter la férule optique,
une interface électrique pour connecter électriquement ledit connecteur électrique avec ledit ensemble optoélectrique (102), l'interface électrique comprenant un élément de contact rigide (110) pour contacter ledit connecteur électrique,
un boîtier de module (115) qui comprend au moins partiellement l'ensemble optoélectrique (102) et les interfaces optique et électrique, le boîtier de module (115) étant configuré pour dissiper la chaleur générée par l'ensemble optoélectrique (102),
dans lequel l'ensemble optoélectrique (102) est monté avec un côté du substrat transparent (128) sur un porteur (112) qui est attaché à une paroi de dissipation de chaleur du boîtier de module (115) de manière thermoconductrice,
dans lequel l'interface optique comprend un connecteur de puce optique (108) avec au moins une lentille et un élément de connexion optique flexible (106) pour établir une interconnexion entre ledit porteur (112) et ledit connecteur optique (104), le connecteur de puce optique (108) étant attaché à la deuxième surface du substrat transparent (128) opposée au premier côté,
dans lequel le substrat transparent (128) est monté à une ouverture (126) dudit porteur (112), de telle sorte que la première surface du substrat transparent (128) portant ledit composant transducteur (130) fait face à ladite paroi de dissipation de chaleur, la deuxième surface opposée du substrat (128) est connectée via ladite au moins une lentille à l'élément de connexion optique flexible (106), et la paroi de dissipation de chaleur et le composant transducteur (130) sont connectés thermiquement via un pont thermique (120),
le module optoélectronique étant **caractérisé en ce que** l'interface électrique comprend un élément de connexion flexible (111) pour réaliser une interconnexion entre ledit porteur (112) et ledit élément de contact rigide, et **en ce que** l'ensemble optoélectrique est monté avec le premier côté du substrat transparent sur ledit porteur de telle sorte que l'ensemble optoélectrique est connecté via ledit pont thermique via ladite ouverture.

2. Module optoélectronique selon la revendication 1, dans lequel ledit pont thermique (120) fait partie intégrante du boîtier (115).

3. Module optoélectronique selon la revendication 1, dans lequel ledit pont thermique (120) est attaché au boîtier (115) au moyen d'une jonction d'interface thermique rigide.

4. Module optoélectronique selon l'une des revendications 1 à 3, dans lequel le pont thermique (120) est couplé au porteur (112) au moyen d'un composé de moulage thermoconducteur (124) qui recouvre et scelle le composant transducteur.

5. Module optoélectronique selon l'une des revendications précédentes, comprenant en outre un dissipateur thermique (118), dans lequel une surface externe de la paroi de dissipation de chaleur est couplée thermiquement audit dissipateur thermique (118).

6. Module optoélectronique selon l'une des revendications précédentes, dans lequel ledit porteur (112) est formé comme une partie intégrante dudit élément de connexion électrique flexible (111).

7. Module optoélectronique selon la revendication 6, dans lequel ledit porteur (112) est conformé comme une feuille flexible.

8. Module optoélectronique selon l'une des revendications précédentes, dans lequel ledit élément de connexion électrique flexible (111) est conformé comme une partie intégrante avec ledit élément de contact rigide (110).

9. Module optoélectronique selon l'une des revendications précédentes, dans lequel ledit composant transducteur comprend au moins un élément parmi une diode laser à cavité verticale émettant par la surface, VCSEL - Vertical-Cavity Surface-Emitting Laser, au moins une photodiode, et au moins un microcontrôleur.

10. Module optoélectronique selon l'une des revendications précédentes, dans lequel l'élément de connexion optique flexible (106) comprend au moins une fibre optique.

11. Module optoélectronique selon l'une des revendications précédentes, dans lequel l'élément de connexion électrique flexible (111) est attaché au porteur (112) et/ou à l'élément de contact rigide (110) au moyen d'un brasage ou d'un collage par un film conducteur anisotrope, ACF - Anisotropic Conductive Film.

12. Module optoélectronique selon l'une des revendications précédentes, dans lequel le boîtier (115) est constitué d'au moins deux coques (114, 116) qui sont jointes le long d'un axe longitudinal du module optoélectronique (110).
